# EUROPÄISCHE PATENTANMELDUNG

(11) **EP 4 745 693 A1**
(43) Veröffentlichungstag der Anmeldung: **20.05.2026**
(21) Anmeldenummer: 25211534.0
(22) Anmeldetag: 28.10.2025
(51) Int. Cl.: G05B 19/404

(54) **BREMSVERFAHREN FÜR WERKZEUGMASCHINEN**

(30) Priorität: 18.11.2024 EP 24213514
(71) Anmelder: Hilti Corporation, 9494 Schaan (LI)
(72) Erfinder: Scherbaum, Markus, 86853 Gennach (DE); Pamulapati, Venkataramana Chowdary, 82269 Geltendorf (DE)
(74) Vertreter: Hilti Aktiengesellschaft Corporate Intellectual Property

(57) **Zusammenfassung**

Die vorliegende Erfindung betrifft ein Verfahren zum Bremsen einer Werkzeugmaschine, wobei die Werkezugmaschine einen Motor aufweist, welcher über ein Riemengetriebe mit einer Ab-triebswelle verbunden ist, wobei das Verfahren folgenden Schritte aufweist:
a) Anlegen bzw. Halten eines auf den Motor wirkenden Bremsmoments für eine erste Zeitspanne;
b) Verringern des Bremsmoments für eine zweite Zeitspanne,
c) Erhöhen bzw. Halten des Bremsmoments für eine dritte Zeitspanne.

## Beschreibung

Die vorliegende Erfindung betrifft ein Verfahren zum Bremsen von Werkzeugmaschinen, insbesondere aber nicht ausschließlich zum Bremsen von Trenn- oder Schneidgeräten. Weitere Aspekte der vorliegenden Erfindung betreffen eine Werkzeugmaschine zur Durchführung des Verfahrens sowie ein Computerprogramm zur Ausführung des Verfahrens durch einen Computer.

### Hintergrund der Erfindung

Elektrisch betriebenen Werkzeugmaschinen weisen in der Regel einen elektrischen Motor auf, welcher über ein Getriebe mit dem Werkzeug verbunden ist. Das Getriebe spielt eine zentrale Rolle bei der Kraftübertragung, der Drehzahlregelung und der Anpassung des Drehmoments. Werkzeugmaschinen wie Bohrmaschinen oder auch Trennschleifer verwenden Getriebe, um die Bewegung des Motors in eine kontrollierte Bewegung des Werkzeugs zu übersetzen. Es gibt eine Vielzahl von Getriebetypen, die jeweils für unterschiedliche Werkzeugmaschinen-Typen verwendet werden. Je nach Anwendungsbereich und den zu übertragenden Kräften und Drehzahlen werden unterschiedliche Getriebearte eingesetzt.

Beispielsweise wird bei Trennschleifern häufig ein Riemengetriebe verwenden. Hierbei wird die Kraft des Motors auf die Schleifscheibe über einen Riemen (bspw. Flach- oder Zahnriemen) übertragen, anstatt einer direkten mechanischen Kopplung durch Zahnräder oder Ketten. Das Getriebe mit Riemenantrieb besteht im Wesentlichen aus Riemenscheiben und dem Riemen selbst, die zusammen das Übersetzungsverhältnis und somit Drehzahl und Drehmoment der Schleifscheibe steuern. Riemenantriebe bieten eine hohe Flexibilität und Laufruhe, erfordern aber häufig auch mehr Wartung als direkte Zahnradsysteme.

Im Bereich der Werkzeugmaschinen ist es ferner bekannt, die Werkzeuge der Werkzeugmaschinen abzubremsen, um eine Arbeit zu beenden oder aus Sicherheitsgründen. Im Stand der Technik sind verschiedene Bremsverfahren bekannt. Es hat sich jedoch gezeigt, dass vor allem bei der Verwendung von Werkzeugmaschinen mit Riemengetrieben es häufig zu einer unzureichenden Übertragung des Bremsmoments vom Motor auf das Werkzeug kommt, sodass der Motor unter Umständen lange vor dem Werkzeug zum Stillstand kommt. Jedoch ist es wichtig vor allem das Werkzeug möglichst schnell abzubremsen, um die Gesundheitsrisiken für den Anwender auf ein Minimum zu reduzieren.

Auf Grundlage der oben genannten Problemstellung ist es eine Aufgabe der vorliegenden Erfindung, ein Verfahren zum Bremsen einer Werkzeugmaschine anzugeben, durch welches Schlupf des Riemens während des Bremsens reduziert werden kann und der Motor sowie das Werkzeug vorzugsweise gleichzeitig oder im Wesentlichen gleichzeitig zum Stillstand kommen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Dementsprechend betrifft die vorliegende Erfindung ein Verfahren zum Bremsen einer Werkzeugmaschine, wobei die Werkzeugmaschine einen Motor aufweist, welcher über ein Riemengetriebe mit einer Abtriebswelle verbunden ist, wobei das Verfahren folgende Schritte aufweist:
a) Erhöhen bzw. Halten eines auf den Motor wirkenden Bremsmoments für eine erste Zeitspanne;
b) Verringern des Bremsmoments für eine zweite Zeitspanne,
c) Erhöhen bzw. Halten des Bremsmoments für eine dritte Zeitspanne.

Bei Riemenantrieben hängt das maximale zu übertragene Drehmoment stark von der Vorspannung des Riemens und der Reibung zwischen Riemen und Riemenscheibe ab. Ein abgenutzter Riemen verliert die Vorspannung, ein verschmutzter und öliger Riemen verliert an Reibung mit der Riemenscheibe, sodass in diesen Fällen weniger Drehmoment übertragen werden kann. Insbesondere sobald der Riemen durchrutscht, kann dieser deutlich weniger Drehmoment übertragen, da die Gleitreibung geringer als die Haftreibung ist. In Bezug auf den Bremsvorgang eines Elektrowerkzeugs bedeutet das, dass der Motor unabhängig vom eingespannten Werkzeug zum Stillstand abbremsen kann, wenn der Riemen durchrutscht. Nur die Gleitreibung der Abtriebswelle sorgt in diesem Fall für ein abbremsendes Drehmoment, welches kleiner als bei einem nicht durchrutschenden Riemen ist. Die Bremszeit des Werkzeugs wird somit verlängert.

Durch das zwischenzeitliche Verringern des Bremsmoments, kann ein Durchrutschen (Schlupf) des Antriebsriemens effektiv reduziert werden. Es wird durch die Verringerung des Bremsmoments erreicht, dass das auf den Motor wirkende Bremsmoment auch bei schlechter Reibung (bspw. verschmutzter oder öliger Riemen) wirkungsvoll auf die Abtriebswelle übertragen werden kann. Sobald der Schlupf (d.h. ein Durchrutschen des Riemens), aufgrund des verringerten Bremsmoments, abgenommen hat, kann das Bremsmoment wieder erhöht werden, um die Abtriebswelle und somit das Werkzeug schnellstmöglich zum Stillstand zu bringen.

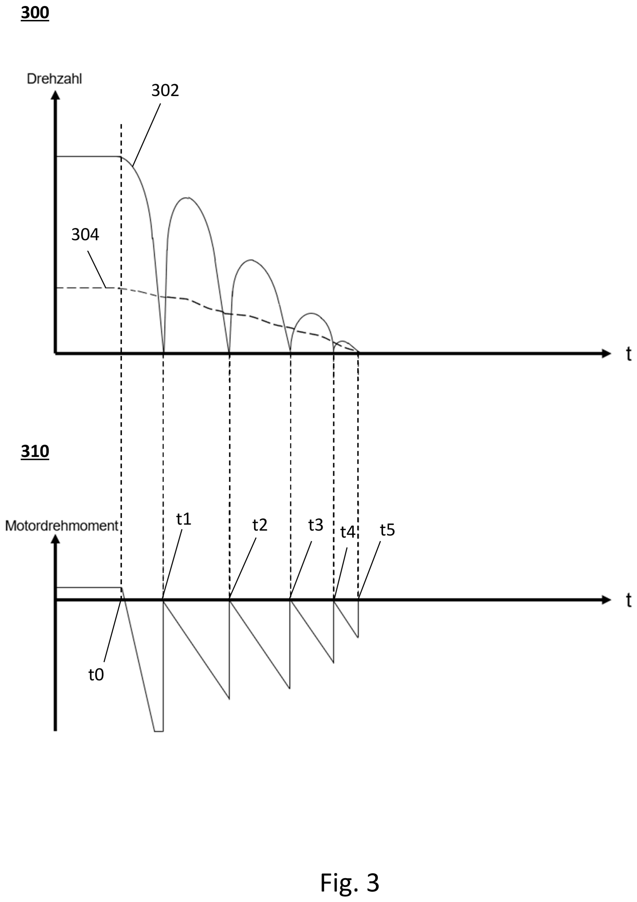

Mit anderen Worten ist es ein Grundgedanke der vorliegenden Erfindung, das Bremsmoment temporär zu verringern, um einem Durchrutschen des Riemens vorzubeugen bzw. einem Durchrutschen entgegenzuwirken. Hierdurch wird die Bremszeit bis zum Stillstand des Motors generell verlängert, jedoch wird eine Verkürzung der Bremszeit bis zum Stillstand des Werkzeugs erreicht. Insbesondere kommen beim erfindungsgemäßen Verfahren der Motor und das Werkzeug gleichzeitig zum Stillstand. Es sei an dieser Stelle bereits erwähnt, dass die zweite Zeitspanne sehr kurz (z.B. im Wesentlichen null) sein kann, d.h. dass das Bremsmoment des Motors gemäß einer Ausführungsvariante (Fig. 3) schlagartig verringert (bspw. schlagartig auf null gesetzt wird) und direkt im Anschluss wieder gesteigert wird. In anderen Ausführungsformen wird das Bremsmoment über einen längeren Zeitpunkt verringert, d.h. das Bremsmoment wird vergleichsweise langsam reduziert.

Nach einer weiteren Ausführungsform wird das Bremsmoment durch ein negatives Drehmoment erzielt. Das negative Bremsmoment kann beispielsweise dadurch erzeugt werden, dass ein bürstenloser Motor so angesteuert wird, dass der Motorstrom ein bremsendes Moment erzeugt.

Nach einer weiteren Ausführungsform wird das Bremsmoment verringert, wenn während der ersten Zeitspanne ein Schlupf des Riemens festgestellt wird. Ein auftretender Schlupf kann auf mehrere Arten festgestellt werden. Beispielsweise kann der Schlupf durch einen Vergleich der Motordrehzahl mit der Drehzahl des Werkzeugs erfasst werden. Alternativ oder zusätzlich kann die negative Beschleunigung (Abbremsbeschleunigung) des Motors dazu verwendet werden, um einen Schlupf zu erfassen. Ist die Abnahme der Motordrehzahl und damit die negative Beschleunigung zu hoch, so kann davon ausgegangen werden, dass das Bremsmoment nicht mehr oder nicht mehr vollständig auf das Werkzeug übertragen wird und somit Schlupf am Riemen besteht. Diese Ausführungsform ist nicht drauf beschränkt, wie der Schlupf des Riemens erfasst wird.

Nach einer weiteren Ausführungsform weist das Verfahren einen Schritt zum Erfassen von Motordrehzahl-Daten auf, welche repräsentativ für eine Drehzahl des Motors sind, und wobei ein Ende der ersten Zeitspanne auf Grundlage der Motordrehzahl-Daten bestimmt wird. Die Motordrehzahl kann beispielsweise über einen Motorpositionssensor (Hall-Sensor, AMR-Sensor, etc.) oder über sensorlose Motorregelungsverfahren bestimmt werden.

Nach einer weiteren Ausführungsform wird ein Ende der ersten und/oder der dritten Zeitspanne erreicht, wenn die Drehzahl des Motors im Wesentlichen Null ist.

Nach einer weiteren Ausführungsform ist die zweite Zeitspanne im Wesentlichen null. Mit anderen Worten, das Bremsmoment wird gemäß dieser Ausführungsvariante schlagartig herabgesetzt. Beispielsweise kann das Bremsmoment sprunghaft auf Null gesetzt werden, wenn das Ende der ersten Zeitspanne erreicht ist. Dabei bedeutet "im Wesentlichen null", dass zwar der Soll-Wert des Bremsmoments am Ende der ersten Zeitspanne schlagartig auf null gesetzt wird, der Ist-Wert in Realität jedoch eine kurze Zeit benötigt, um auf null abzusinken. Gemäß dieser Ausführungsvariante handelt es sich bei der bis zum Absinken des Bremsmoments benötigten Zeit, um die zweite Zeitspanne.

Nach einer weiteren Ausführungsform werden nach Schritt c) die Schritte b) und c) wiederholt, insbesondere so lange bis die Abtriebswelle zum Stillstand kommt. Gemäß dieser Ausführungsform sieht das Verfahren vor, das Bremsmoment periodisch zu verringern und wieder zu erhöhen, um die Zeit bis zum Stillstand der Abtriebswelle und somit des Werkzeugs zu minimieren. Durch das regelmäßige Verringern und Erhöhen des Bremsmoments, wird erreicht, dass ein Schlupf des Antriebsriemens geringgehalten und dennoch ein möglichst großes Bremsmoment angelegt wird. Hierdurch wird die Bremszeit bis zum Stillstand des Werkzeugs effektiv reduziert.

Nach einer weiteren Ausführungsform handelt es sich bei der ersten, zweiten und/oder der dritten Zeitspanne um vorbestimmte Zeitintervalle. Diese Zeitintervalle können herstellerseitig vorgegeben sein.

Nach einer weiteren Ausführungsform weist das Verfahren folgende weitere Schritte auf:
- Erfassen von Motordrehzahl-Daten, welche repräsentativ für eine Drehzahl des Motors sind;
- Erfassen/Schätzen von Abtriebsdrehzahl-Daten, welche repräsentativ für eine Drehzahl der Abtriebswelle sind;
- Bestimmung der Drehzahl des Motors sowie der Drehzahl der Abtriebswelle;
- Bestimmung eines Schlupfwerts auf Grundlage der Drehzahl des Motors gegenüber der Drehzahl der Abtriebswelle;
- Erhöhen bzw. Verringern des Bremsmoments auf Grundlage des Schlupfwerts.

Die Drehzahl der Abtriebswelle kann über Positionssensoren erfasst werden. Auch die Drehzahl der Trennscheibe ist ein Maß für die Drehzahl der Abtriebswelle. Die Drehzahl der Abtriebswelle kann auch geschätzt werden, bspw. aus der maximal möglichen abbremsenden Beschleunigung des Systems aus Trennscheibe und Motor.

Nach einer weiteren Ausführungsform werden die Länge des ersten, des zweiten und des dritten Zeitintervalls derart geregelt, dass der Schlupfwert in einen vorbestimmten Wertebereich fällt.

Nach einer weiteren Ausführungsform werden die Zeitspannen derart geregelt, dass der Schlupfwert zwischen 0% und 40%, vorzugsweise zwischen 0% und 30% beträgt.

Nach einer weiteren Ausführungsform wird das Bremsmoment während der ersten Zeitspanne maximiert.

Ein weiterer Aspekt der vorliegenden Erfindung betrifft eine Werkzeugmaschine mit einem Motor und einer über ein Riemengetriebe angetriebenen Abtriebswelle, wobei die Werkzeugmaschine eine Steuervorrichtung aufweist, welche dazu ausgerichtet ist, das oben genannte Verfahren durchzuführen.

Die Werkzeugmaschine kann ein Trennschleifer sein.

Ein weiterer Aspekt der vorliegenden Erfindung betrifft ein Computerprogramm, umfassend Befehle, die bei der Ausführung des Programms durch einen Computer diesen veranlassen, das oben genannte Verfahren auszuführen.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: schematische Darstellung der Drehzahl und Drehmoments über die Zeit während eines Bremsvorgangs ohne Schlupf;
- Fig. 2: schematische Darstellung der Drehzahl und Drehmoments über die Zeit während eines Bremsvorgangs mit Schlupf;
- Fig. 3: schematische Darstellung der Drehzahl und Drehmoments über die Zeit während eines Bremsverfahrens gemäß einer Ausführungsform der vorliegenden Erfindung;
- Fig. 4: schematische Darstellung der Drehzahl und Drehmoments über die Zeit während eines Bremsverfahrens gemäß einer Ausführungsform der vorliegenden Erfindung.

### Detaillierte Beschreibung

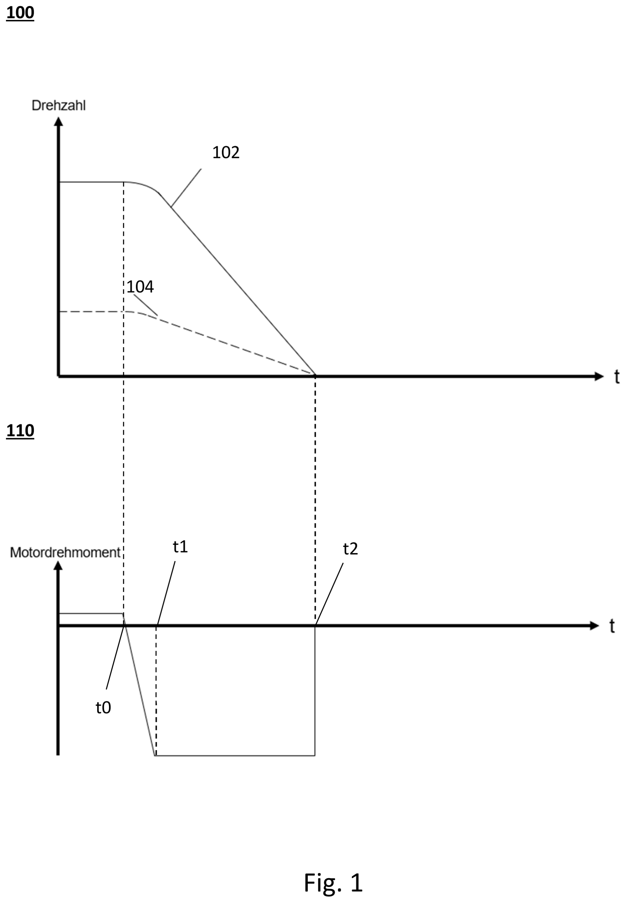

Figur 1 zeigt eine schematische Darstellung eines Bremsvorgangs einer Werkzeugmaschine mit Riemenantrieb. Insbesondere kann es sich bei der Werkzeugmaschine um einen Trendschleifer handeln. Nachfolgend wird nur beispielhaft auf einen Trennschleifer Bezug genommen. Selbstverständlich ist die vorliegende Erfindung jedoch nicht auf Trennschleifer beschränkt, sondern kann insbesondere bei jeder anderen Werkzeugmaschine mit Riemenantrieb verwendet werden.

In Figur 1 ist ein erster Graph 100 dargestellt, welcher die Drehzahl über die Zeit zeigt. Ein zweiter Graph 110 stellt das Motordrehmoment über die Zeit dar. Im ersten Graph 100 ist einerseits die Motordrehzahl 102 über die Zeit dargestellt. Andererseits ist aus dem ersten Graph 100 auch die Drehzahl 104 der Trennscheibe über die Zeit zu entnehmen. Im zweiten Graph 110 ist lediglich das Motordrehmoment dargestellt. Bis zum Zeitpunkt t0, befindet sich der Trennschleifer im Normalbetrieb, d. h. der Motor wird mit einer konstanten Drehzahl und einem konstanten Drehmoments betrieben. Auch die Drehzahl 104 der Trennscheibe ist bis zum Zeitpunkt t0 konstant. Der Unterschied zwischen der Motordrehzahl und der Drehzahl der Trennscheibe existiert aufgrund der Übersetzung im Riemengetriebe. Wie es im ersten Graph 100 zu sehen ist wird die Trennscheibe insbesondere mit einer niedrigeren Drehzahl betrieben als der Motor.

Zum Zeitpunkt t0 beginnt ein aktiver Bremsvorgang. Beispielsweise kann der aktive Bremsvorgang durch eine gegensätzliche Ansteuerung des Motors bewirkt werden. Mit anderen Worten, zum Zeitpunkt t0 erzeugt der Motor ein negatives, d. h. ein umgekehrtes Drehmoment. Das maximale negative Drehmoment ist nach kurzer Zeit, zum Zeitpunkt t1, erreicht. Durch das negative Drehmoment wird die Motordrehzahl stetig verringert, bis die Motordrehzahl zum Zeitpunkt t2 den Wert null erreicht, d. h. der Motor steht still. In dem in Figur 1 dargestellten idealen Bremsverlauf, folgt die Drehzahl 104 der Trennscheibe der Motordrehzahl 102 exakt. Mit anderen Worten, auch die Drehzahl 104 der Trennscheibe verringert sich stetig, bis diese ebenfalls zum Zeitpunkt t2 den Wert null erreicht. Die Trennscheibe und der Motor erreichen somit zum selben Zeitpunkt t2 den Stillstand. Aufgrund des Riemengetriebes weist jedoch der Abfall der Drehzahl der Trennscheibe 104 eine geringere Steigung auf, als dies bei der Motordrehzahl 102 der Fall ist.

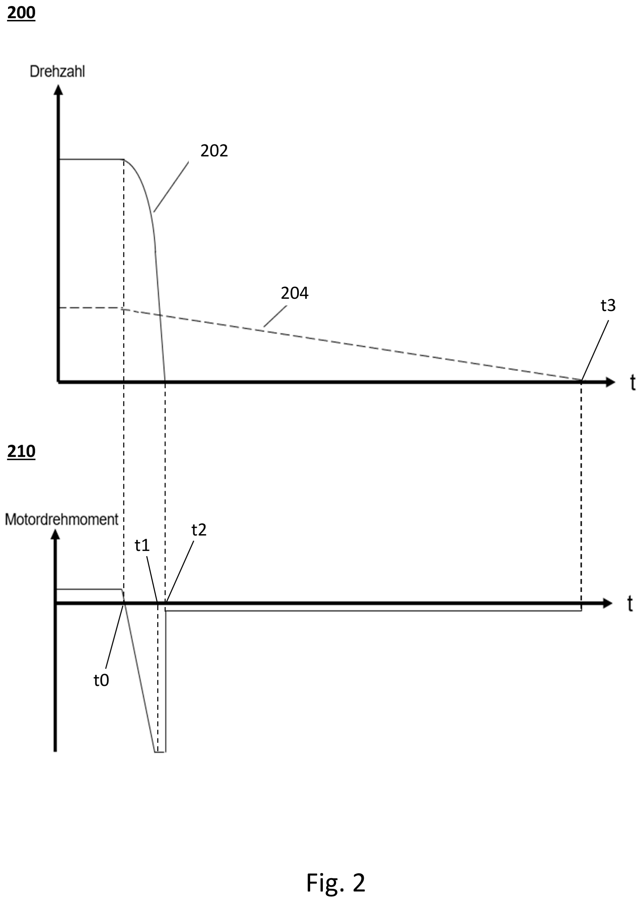

Der in Figur 1 dargestellte Bremsvorgang ist häufig nur dann zu beobachten, wenn der Bremsvorgang über einen ausreichend langen Zeitraum durchgeführt wird, d. h. wenn das Bremsmoment nicht zu hoch wird. Denn bei einem zu hohen Bremsmoment, d. h. bei einer zu hohen negativen Beschleunigung, kommt es zu einem Durchrutschen des Riemens, wie dies schematisch in Figur 2 dargestellt ist. Auch in Figur 2 ist ein erster Graph 200 dargestellt, welcher die Drehzahl über die Zeit zeigt. Ein zweiter Graph 210 zeigt das Motor Drehmoment über die Zeit. In dem in Figur 2 gezeigten Szenario ist der Verlauf der Drehzahlen der Trennscheibe 204 und des Motors 202 gezeigt, wenn es zu einem Durchrutschen kommt.

Auch in dem in Figur 2 dargestellten Szenario befindet sich der Trennschleifer bis zum Zeitpunkt t0 im Normalbetrieb, d. h. der Motor wird mit einer konstanten Drehzahl und einem konstanten Drehmoment betrieben. Bis zum Zeitpunkt t0 wird dementsprechend auch die Trennscheibe mit einer konstanten Drehzahl betrieben. Zum Zeitpunkt t0 beginnt wiederum ein aktiver Bremsvorgang. Durch die aktive Bremsung wird ein negatives Motor Drehmoment erzeugt, welches zum Zeitpunkt t1 ein Maximum erreicht. Wenn das negative Drehmoment die Haftreibung des Riemens überschreitet, kommt es zum Durchrutschen des Riemens, d. h. das Bremsmoment wird nicht mehr vollständig oder gar nicht auf die Riemenscheibe des Abtriebs übertragen. Mit anderen Worten, es kommt zu einer Relativbewegung zwischen der mit der Trennscheibe verbundenen Riemenscheibe und dem Riemen. Diese Relativbewegung wird auch als Schlupf bezeichnet. Zu diesem Zeitpunkt wird der Motor unabhängig vom Werkzeug, d.h. der Trennscheibe, abgebremst. Das bremsende Motordrehmoment wirkt nun nur noch gegen die geringere Motorträgheit, sodass der Motor schneller zum Stillstand kommt. Im ersten Graph 200 aus Figur 2 ist der Motorstillstand zum Zeitpunkt t2 erreicht. Der Bremsvorgang für den Motor ist bereits beendet, während sich das Werkzeug noch mit relativ hoher Drehzahl bewegt. Einzig die Gleitreibung zwischen der Riemenscheibe des Abtriebs und dem Riemen bremst das Werkzeug, d. h. die Trennscheibe, ab, sodass der Stillstand der Trennscheibe deutlich später, nämlich zum Zeitpunkt t3 erreicht wird.

Wie dies unmittelbar aus dem Vergleich der Figuren eins und zwei hervorgeht, kommt es durch das Durchrutschen des Riemens zu einer deutlichen Verlängerung des Bremsvorgangs. Insbesondere kommt das Werkzeug signifikant später zum Stillstand, wodurch die Sicherheit des Benutzers gefährdet werden kann. Es ist deshalb eine Aufgabe der vorliegenden Erfindung ein Bremsverfahren für Riemenantriebe anzugeben, welches das Durchrutschen des Riemens verhindert bzw. verringert und dementsprechend die Zeit bis zum Stillstand des Werkzeugs signifikant reduziert.

Die Lösung dieser Aufgabe basiert grundlegend darauf, dass die Zeiten während des Bremsvorgangs, in welchen der Riemen durchrutscht, d. h. der Schlupf 100 % beträgt, reduziert werden. Insbesondere wird dies durch eine fortschrittliche Regelung des Bremsmoments erzielt. Hierdurch soll erreicht werden, dass das Bremsmoment nicht oder nur sehr kurzzeitig zu hoch wird, um einen Schlupf zu verhindern bzw. signifikant zu reduzieren. Beispielsweise kann das Bremsmoment nur intervallweise angelegt werden. Alternativ kann die Stärke des Bremsmoments aktiv reguliert werden. Beispielsweise kann das Bremsmoment auf Grundlage des Schlupfwerts geregelt werden.

Die Figur 3 zeigt ein erstes erfindungsgemäßes Bremsverfahren, um die Zeiten mit hohem Schlupf zu verringern. Bis zum Zeitpunkt t0 befindet sich der Trennschleifer wieder im Normalbetrieb, d. h. die Motordrehzahl und die Drehzahl der Trennscheibe 302, 304 sind konstant. Auch das Motordrehmoment des zweiten Graphs 310 ist während der ersten Zeitspanne konstant. Zum Zeitpunkt t0 beginnt der Bremsvorgang. Das bremsende (negative) Motor-Drehmoment wird so lange erhöht, bis ein maximales negatives Drehmoment erreicht ist. Die Motordrehzahl 302 wird durch dieses maximale negative Drehmoment verringert, bis die Motordrehzahl 302 null beträgt, d. h. der Motor zum Zeitpunkt t1 zum Stillstand kommt. Der Zeitraum zwischen t0 und t1 entspricht einer ersten Zeitspanne, in welcher das Bremsmoment zunächst erhöht und, bspw. nach Erreichen des maximal negativen Drehmoments, gehalten wird. Während dieses starken Abbremsens des Motors steigt der Schlupf am Riemen bis es zu einem vollständigen durchrutschen mit 100 % Schlupf kommt.

Sobald der Motor zum Zeitpunkt t1 den Stillstand erreicht hat, ist die erste Zeitspanne beendet. Das Bremsmoment, d. h. das negative Drehmoment, wird im Beispiel gemäß Figur 3 schlagartig auf null zurückgesetzt. Beispielsweise können hierfür Drehzahlsensoren am Motor verwendet werden. Die Motordrehzahl 302 wird beispielsweise durch eine Steuervorrichtung überwacht. Sobald die Motordrehzahl den Wert null erreicht hat, setzt die Steuervorrichtung das Bremsmoment auf null zurück. In Figur 3 geschieht dies umgehend, d.h. das Bremsmoment wird zum Zeitpunkt t1 schlagartig auf null reduziert. Dies ist korrekt für den Soll-Wert des Bremsmoments. In Realität vergeht eine kurze Zeit bis sich der Ist-Wert des Bremsmoments auf null einstellt. Diese Zeit entspricht in der Ausführungsform gemäß Fig. 3 der zweiten Zeitspanne, während der das Bremsmoment reduziert werden.

Nach der zweiten Zeitspanne (in Fig. 3 ebenfalls Zeitpunkt t1), wird das Bremsmoment wieder langsam gesteigert. Dies ist im zweiten Graph 310 an der stetigen, negativen Steigung des Motordrehmoments ab dem Zeitpunkt t1 zu erkennen. Durch das zwischenzeitlich geringere bremsende Drehmoment, kann sich die Motordrehzahl wieder an die Werkzeugdrehzahl angleichen, d. h. der Schlupf wird geringer. Es sei an dieser Stelle auch erwähnt, dass zwischen den Zeitpunkten t1 und t2 auch die Drehzahl des Motors 302 wieder zunimmt, wie dies durch den ersten Graph 300 dargestellt ist. Dies ist insbesondere deshalb der Fall, da, durch den nun verringerten Schlupf, das zum Zeitpunkt t1 noch vorhandene Drehmoment der Trennscheibe auf den Motor übertragen wird, wodurch dieser wieder hochläuft. Zwischen den Zeitpunkten t1 und t2 wirkt das Bremsmoment zumindest zeitweise wieder auf die Trennscheibe und den Motor. Sobald das bremsende Motor-Drehmoment wieder die Haftreibung des Riemens übersteigt, kommt es erneut zu ansteigendem Schlupf. In Figur 3 ist dies beispielsweise in der Hälfte der Zeitspanne zwischen t1 und t2 erreicht. Zu diesem Zeitpunkt wird der Motor mehr als die Trennscheibe durch das Bremsmoment abgebremst. Das negative Drehmoment wird so lange durch die Steuervorrichtung erhöht, bis der Motor zum Zeitpunkt t2 wieder den Stillstand erreicht. Die Zeit zwischen t1 und t2 entspricht einer dritten Zeitspanne, in welcher das Bremsmoment erhöht, insbesondere stetig, erhöht wird, nachdem es in der zweiten Zeitspanne auf null gesetzt wurde.

Das Bremsmoment wird zum Zeitpunkt t2, d.h. wenn die Drehzahl des Motors null erreicht, wieder verringert, also auf null zurückgesetzt. Auch zum Zeitpunkt t2 hat die Trennscheibe den Stillstand noch nicht erreicht. Die Steuervorrichtung erkennt, dass die Trennscheibe auch weiterhin nicht stillsteht (bspw. anhand einer Drehzahlmessung der Trennscheibe) und erhöht wiederum langsam das Bremsmoment ab dem Zeitpunkt t2. Kurz nach dem Zeitpunkt t2 ist das Bremsmoment noch sehr gering, sodass sich der Schlupf wiederum verringert und das Bremsmoment einerseits auf die Trennscheibe und andererseits auf den Motor wirkt. Auch in der nächsten Zeitspanne zwischen den Zeitpunkten t2 und t3 kann es zu einer Überschreitung der Haftreibung durch das Bremsmoment kommen, sodass auch hier der Schlupf zunimmt bzw. 100 % erreicht. Dementsprechend ist die Steuervorrichtung derart konfiguriert, dass sie auch weiterhin das Bremsmoment auf den Wert null setzt, sobald der Motor den Stillstand erreicht hat. Sollte zum Zeitpunkt t3, d.h. wenn der Motor zum dritten Mal zum Stillstand gekommen ist, die Drehzahl der Trennscheibe 304 auch weiterhin nicht null sein, so erhöht die Steuervorrichtung wiederum das Bremsmoment stetig.

Der oben genannte Vorgang wiederholt sich so lange, bis der Motor sowie die Trennscheibe zum Zeitpunkt t5 zum Stillstand kommen. Mit anderen Worten, nach dem erfindungsgemäßen Verfahren, wird das Bremsmoment periodisch erhöht und verringert. Die Steuervorrichtung kann dazu ausgebildet sein, dass Bremsmoment ab dem Zeitpunkt t1, d. h. nach dem der Motor zum ersten Mal zum Stillstand gekommen ist, jeweils mit einer konstanten Steigung zu erhöhen. Mit anderen Worten, die Steigung des Bremsmoment ab den Zeitpunkten t1, t2, t3, und t4 kann im Wesentlichen konstant sein. Die Steigung, d. h. Geschwindigkeit mit welcher das Bremsmoment erhöht wird, kann dabei durch den Hersteller der Werkzeugmaschine vorgegeben sein.

Aus dem Vergleich der Figuren 2 und 3 ist ersichtlich, dass es durch das erfindungsgemäße Verfahren signifikant schneller zum Stillstand der Trennscheibe (Zeitpunkt t3 bzw. t5) kommt. Dies wird insbesondere dadurch erreicht, dass das negative Motordrehmoment regelmäßig reduziert, hier auf null abgesenkt, wird, um Schlupf am Riemen zu reduzieren. In Figur 3 wird das Motordrehmoment reduziert, wenn die Motordrehzahl 302 den Wert null erreicht hat.

In hier nicht dargestellten, alternativen Ausführungsvarianten kann das Bremsmoment auch unabhängig von der Motordrehzahl variiert werden. Beispielsweise kann das Bremsmoment in vorbestimmten Abständen, z.B. in regelmäßigen Zeitabständen verringert werden. Beispielsweise kann das Bremsmoment alle 20 ms wieder auf null gesetzt werden. Nachdem das Bremsmoment auf null gesetzt wird, prüft eine Steuervorrichtung, ob die drehende Trennscheibe den Motor wieder beschleunigt. Ist dies nicht der Fall, so erhöht die Steuervorrichtung das Bremsmoment stetig für die nächsten 20 ms, d. h. bis das Bremsmoment wieder (schlagartig) auf null zurückgesetzt wird. Wird der Motor wieder beschleunigt, ist Schlupf aufgetreten. Der Startwert des Bremsmoments wird für die nächsten 20 ms reduziert und dann stetig erhöht. Der Vorteil dieser Ausführungsvariante ist, dass nicht abgewartet werden muss, bis die Motordrehzahl Null erreicht.

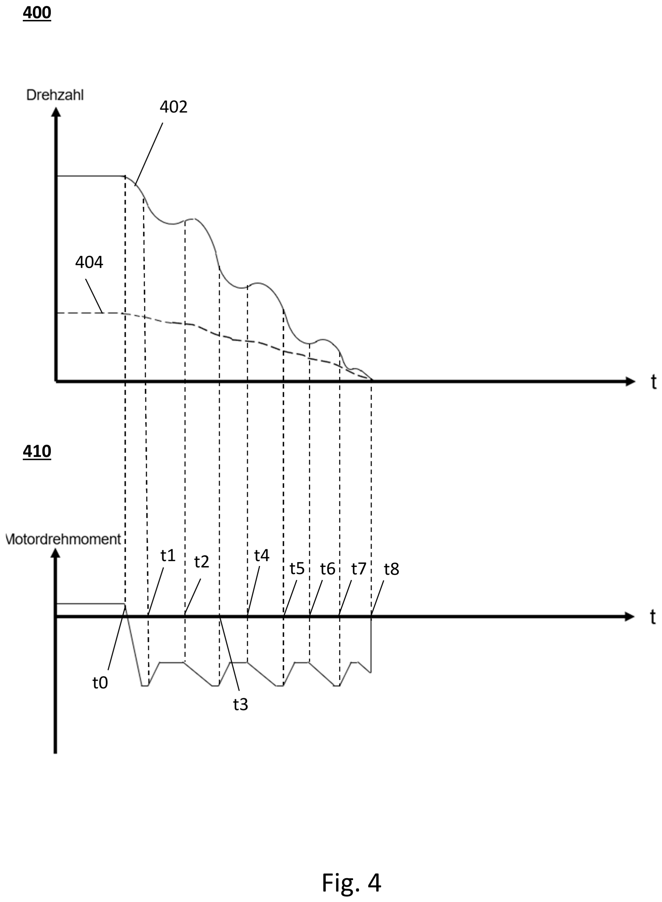

In Figur 4 ist in eine weitere Ausführungsform des erfindungsgemäßen Bremsverfahrens dargestellt. Bei dieser Ausführungsvariante regelt eine Steuervorrichtung den am Riemengetriebe auftretenden Schlupf. Beispielsweise kann die Steuervorrichtung dazu ausgebildet sein, den Schlupfwert unter 40 % zu halten. Der Schlupfwert ergibt sich insbesondere aus einem Quotienten zwischen der Motordrehzahl 402 und der Drehzahl der Trennscheibe 404. Die Steuervorrichtung kann beispielsweise einen Algorithmus aufweisen, welche zur Berechnung des Schlupfwerts dient.

Auch in Figur 4 ist im ersten Graph 400 die Drehzahl des Motors bzw. der Trennscheibe über die Zeit dargestellt. Im zweiten Graph 410 ist das Motor Drehmoment über die Zeit dargestellt. Bis zum Zeitpunkt t0 befindet sich der Trennschleifer im Normalbetrieb, d. h. die Motordrehzahl 402 und das Motordrehmoment sind konstant. Auch die Drehzahl der Trennscheibe ist bis zum Zeitpunkt t0 konstant.

Zum Zeitpunkt t0 beginnt der Bremsvorgang. Die Steuervorrichtung erzeugt ein negatives Drehmoment, d. h. ein Bremsmoment, welches der Antriebsbewegung des Motors entgegenwirkt. Die Steuervorrichtung kann beispielsweise dazu ausgelegt sein, das Bremsmoment stetig mit einer geeigneten, beispielsweise vorbestimmten, Geschwindigkeit zu erhöhen. Die Steuervorrichtung überprüft den Schlupf und/oder die Beschleunigung des Motors während des Anstiegs des Bremsmoments. Wie oben bereits erwähnt, kann die Steuervorrichtung hierzu die Motordrehzahl 402 mit der korrespondierenden Drehzahl der Trennscheibe 404 vergleichen. Die Motordrehzahl bzw. die Drehzahl der Trennscheibe kann die Steuervorrichtung aus Motordrehzahl-Daten bzw. Abtriebsdrehzahl-Daten ermitteln, welche beispielsweise durch geeignete Sensoren zur Verfügung gestellt werden können. Alternativ kann die Drehzahl der Trennscheibe auch auf Grundlage von Motorparametern, bspw. der Drehzahl des Motors, abgeschätzt werden. Die Erfindung ist nicht darauf beschränkt, wie derartige Daten erfasst werden, solange diese repräsentativ für die Motordrehzahl bzw. für die Drehzahl der Trennscheibe sind.

Ermittelt die Steuervorrichtung, dass der Schlupfwert einen festlegbaren Grenzwert überschreitet, beispielsweise 40%, so verhindert die Steuervorrichtung eine weitere Erhöhung des Bremsmoments. In Figur 4 ist der Schlupfwert zum Zeitpunkt t1 erreicht. Der Zeitraum zwischen t0 und t1 entspricht einer ersten Zeitspanne, in welcher das Bremsmoment zunächst erhöht und danach gehalten wird. Um den Schlupfwert zu verringern, reduziert die Steuervorrichtung zum Zeitpunkt t1 das Bremsmoment, bis der Schlupfwert wieder unter den Grenzwert von beispielsweise 40% fällt. Die Steuervorrichtung kann dazu ausgebildet sein, die Verringerung des Bremsmoments dann zu unterbrechen, wenn der Schlupfwert unter den Grenzwert gefallen ist. Wie aus dem zweiten Graph 410 aus Figur 4 ersichtlich ist, kann das derart reduzierte Bremsmoment für eine gewisse Zeitspanne konstant gehalten werden, sodass es zu einer weiteren Reduzierung des Schlupfwert kommt. Zu einem Zeitpunkt t2, d.h. wenn der Schlupfwert den gewünschten Grenzwert unterschreitet, erhöht die Steuervorrichtung das Bremsmoment abermals. Die Zeitspanne zwischen t1 und t2 entspricht der zweiten Zeitspanne, in welcher das Bremsmoment reduziert wird. Dieser Vorgang wird im Beispiel gemäß Figur 4 so lange fortgesetzt, bis sowohl der Motor als auch die Trennscheibe im Zeitpunkt t8 zum Stillstand kommen. Insbesondere erhöht die Steuervorrichtung das Bremsmoment zu den Zeitpunkten t4 und t6, während das Bremsmoment zu den Zeitpunkten t3, t5 und t7 verringert wird.

Die Regelung auf den gewünschten Schlupf gemäß Figur 4 wird also dadurch erreicht, dass das bremsende Motordrehmoment kontinuierlich angepasst wird. Bei zu großem Schlupf wird das bremsende (negative) Motordrehmoment verringert, dadurch reduziert sich der Schlupf. Wird der Schlupf geringer, wird das bremsende (negative) Drehmoment wieder erhöht. Hierdurch wird die Bremszeit der Trennscheibe noch einmal wesentlich reduziert. Im Vergleich zu Figur 3 kommt es gemäß Figur 4 erst dann zum Stillstand des Motors, wenn auch die Trennscheibe zum Stillstand kommt. Mit anderen Worten, die Trennscheibe und der Motor kommen beide erst zum Zeitpunkt t8 gleichzeitig zum Stillstand. Dagegen kommt der Motor gemäß der Ausführungsform aus Figur 3 mehrfach zum Stillstand bevor auch die Trennscheibe zum Stillstand kommt.

In einer alternativen Ausführungsvariante kann der Schlupf (bzw. zu hoher Schlupf) auch aufgrund einer Steigung der Motordrehzahl bestimmt werden. Bekanntlich handelt es sich bei der Steigung der Motordrehzahl um die Beschleunigung des Motors. Sollte die negative Beschleunigung, d. h. das Abbremsen des Motors, zu schnell werden, so kann davon ausgegangen werden, dass Schlupf auftritt. Eine Steuervorrichtung kann dementsprechend dazu ausgerichtet sein, die Motorbeschleunigung zu erfassen und diese mit einem Beschleunigungsgrenzwert zu vergleichen. Der Beschleunigungsgrenzwert kann beispielsweise herstellerseitig vorgegeben sein.

Der Beschleunigungsgrenzwert wird vor allem durch die Massenträgheit der Trennscheibe bestimmt, denn das Drehmoment der Trennscheibe kann aus physikalischen Gründen nicht beliebig schnell bis zum Stillstand abgebremst werden. Generell gilt, dass die Zeitspanne zum kompletten Abbremsen der Trennscheibe eine Funktion der Massenträgheit sowie des maximalen Bremsmoments ist. Ohne Schlupf wird das volle Bremsmoment des Motors auf die Trennscheibe übertragen. Es lässt sich berechnen bzw. abschätzen, wie lange die Trennscheibe bei maximalen Motorbremsmoment benötigt, um zum Stillstand zu gelangen. Auf Grundlage der erwarteten Zeitspanne bis zur Bremsung der Trennscheibe, lässt sich ermitteln, wie hoch die Bremsbeschleunigung, d. h. negative Beschleunigung, des Motors maximal sein kann, da dieser bei nicht vorhandenem Schlupf über die gleiche Zeitspanne wie die Trennscheibe abgebremst wird (vgl. Fig. 1).

Bei Auftreten von Schlupf kommt es jedoch dazu, dass das Bremsmoment nur noch (bzw. Hauptsächlich) auf den Motor wirkt und somit eine geringere Massenträgheit abgebremst werden muss. Die Folge ist eine weitaus höhere Bremsbeschleunigung des Motors, als dies im System mit einer Trennscheibe zu erwarten ist. Der Beschleunigungsgrenzwert kann als eine Motorbeschleunigung festgelegt werden, welche schneller ist, als diese mit der Massenträgheit der Trennscheibe erwartet wäre. Sollte die negative Beschleunigung des Motors diesen Beschleunigungsgrenzwert überschreiten, so geht die Steuervorrichtung von dem Aufkommen von Schlupf aus und beginnt das Bremsmoment zu verringern. Das Bremsmoment kann dann so lange verringert werden, bis sich die negative Motorbeschleunigung wieder zureichend verlangsamt, z.B. unter einen zweiten Beschleunigungsgrenzwert fällt, oder bis die Motorbeschleunigung den Wert 0 erreicht. Danach kann die Steuervorrichtung das Bremsmoment entweder halten oder wieder erhöhen.

Die vorliegende Erfindung ist nicht auf die in den Figuren gezeigten Ausführungsformen beschränkt, sondern ergibt sich aus einer Kombination sämtlicher hierin offenbar der Merkmale.

### Bezugszeichenliste

- 100, 200, 300, 400: erster Graph
- 102, 202, 302, 402: Motordrehzahl
- 104, 204, 304, 404: Drehzahl Trennscheibe
- 110, 210, 310, 410: zweiter Graph
- t1, t2, t3, t4, t5, t6, t7, t8: Zeitpunkt

## Patentansprüche

1. Verfahren zum Bremsen einer Werkzeugmaschine, wobei die Werkezugmaschine einen Motor aufweist, welcher über ein Riemengetriebe mit einer Abtriebswelle verbunden ist, wobei das Verfahren folgenden Schritte aufweist:
a) Anlegen bzw. Halten eines auf den Motor wirkenden Bremsmoments für eine erste Zeitspanne;
b) Verringern des Bremsmoments für eine zweite Zeitspanne,
c) Erhöhen bzw. Halten des Bremsmoments für eine dritte Zeitspanne.

2. Verfahren nach Anspruch 1,
wobei das Bremsmoment durch ein negatives Drehmoment erzielt wird.

3. Verfahren nach Anspruch 1 oder 2,
wobei das Verfahren einen Schritt zum Erfassen von Motordrehzahl-Daten aufweist, welche repräsentativ für eine Drehzahl des Motors sind, und wobei ein Ende der ersten Zeitspanne und/oder der dritten Zeitspanne auf Grundlage der Motordrehzahl-Daten bestimmt wird.

4. Verfahren nach einem der Ansprüche 1 bis 3,
wobei ein Ende der ersten und/oder der dritten Zeitspanne erreicht wird, wenn die Drehzahl des Motors im Wesentlichen Null ist.

5. Verfahren nach einem der Ansprüche 1 bis 4,
wobei die zweite Zeitspanne im Wesentlichen Null ist.

6. Verfahren nach einem der Ansprüche 1 bis 5,
wobei nach Schritt c) die Schritte b) und c) wiederholt werden, insbesondere so lange bis die Abtriebswelle zum Stillstand kommt.

7. Verfahren nach Anspruch 1 oder 2,
wobei es sich bei der ersten, zweiten und/oder der dritten Zeitspanne um vorbestimmte Zeitintervalle handelt.

8. Verfahren nach Anspruch 1 oder 2,
wobei das Verfahren folgende weitere Schritte aufweist:
- Erfassen von Motordrehzahl-Daten, welche repräsentativ für eine Drehzahl des Motors sind;
- Erfassen/Schätzen von Abtriebsdrehzahl-Daten, welche repräsentativ für eine Drehzahl der Abtriebswelle sind;
- Bestimmung der Drehzahl des Motors sowie der Drehzahl der Abtriebswelle;
- Bestimmung eines Schlupfwerts auf Grundlage der Drehzahl des Motors gegenüber der Drehzahl der Abtriebswelle;
- Erhöhen bzw. Verringern des Bremsmoments auf Grundlage des Schlupfwerts.

9. Verfahren nach Anspruch 8,
wobei die Länge des ersten, des zweiten und des dritten Zeitintervalls derart geregelt werden, dass der Schlupfwert in einen vorbestimmten Wertebereich fällt.

10. Verfahren nach Anspruch 8 oder 9,
wobei die Zeitspannen derart geregelt werden, dass der Schlupfwert zwischen 0% und 40%, vorzugsweise zwischen 0% und 30% beträgt.

11. Verfahren nach Anspruch 2,
wobei das Bremsmoment während der ersten Zeitspanne maximiert wird.

12. Werkzeugmaschine mit einem Motor und einer über ein Riemengetriebe angetriebenen Abtriebswelle, wobei die Werkzeugmaschine eine Steuervorrichtung aufweist, welche dazu ausgerichtet ist, das Verfahren nach einem der Ansprüche 1 bis 11 durchzuführen.

13. Werkzeugmaschine nach Anspruch 12,
wobei die Werkzeugmaschine ein Trennschleifer ist.

14. Computerprogramm, umfassend Befehle, die bei der Ausführung des Programms durch einen Computer diesen veranlassen, das Verfahren nach einem der Ansprüche 1 bis 11 auszuführen.

15. Verfahren nach Anspruch 1 oder 2,
wobei das Verfahren folgende weitere Schritte aufweist:
- Erfassen von Motordrehzahl-Daten, welche repräsentativ für eine Drehzahl des Motors sind
- Bestimmung der Beschleunigung des Motors auf Grund der Motordrehzahl-Daten;
- Vergleichen der Beschleunigung des Motors mit einem Beschleunigungsgrenzwert;
- Verringern bzw. Erhöhen des Bremsmoments auf Grundlage des Vergleichs.
